# EUROPÄISCHE PATENTSCHRIFT

(11) **EP 3 807 071 B1**
(45) Veröffentlichungstag und Bekanntmachung des Hinweises auf die Patenterteilung: **30.08.2023**
(21) Anmeldenummer: 19730303.5
(22) Anmeldetag: 07.06.2019
(51) Int. Cl.: B29C 45/76, B29C 44/58, B29C 48/92, B29C 44/60, B29C 45/56

(54) **WERKZEUG ZUR KUNSTSTOFFVERARBEITUNG MIT SCHWINGUNGSERZEUGUNGSELEMENT UND SCHWINGUNGSERFASSUNGSELEMENT**
TOOL FOR PROCESSING PLASTIC, HAVING AN OSCILLATION-GENERATING ELEMENT AND AN OSCILLATION-SENSING ELEMENT
OUTIL DE FAÇONNAGE DE PLASTIQUE À L'AIDE D'UN ÉLÉMENT GÉNÉRATEUR DE VIBRATIONS ET UN ÉLÉMENT DÉTECTEUR DE VIBRATIONS

(30) Priorität: 15.06.2018 DE 102018114408
(43) Veröffentlichungstag der Anmeldung: 21.04.2021
(73) Patentinhaber: Siegfried Hofmann GmbH, 96215 Lichtenfels (DE)
(72) Erfinder: HOFMANN, Günther, 96215 Lichtenfels (DE); HOFMANN, Stefan, 96215 Lichtenfels (DE); BECK, Jonas, 96050 Bamberg (DE); STRELLER, Matthias, 96117 Lichteneiche (DE); BECKER, David, 96047 Bamberg (DE); ROSSTEUTSCHER, Immanuel, 96047 Coburg (DE)
(74) Vertreter: Hafner & Kohl PartmbB
(86) Internationale Anmeldenummer: PCT/EP2019/065030
(87) Internationale Veröffentlichungsnummer: WO 2019/238584

(56) Entgegenhaltungen:
- EP-A1- 2 179 835
- CN-A- 106 965 395
- CN-A- 107 718 465
- DE-A1- 10 355 163
- DE-A1- 19 737 276
- DE-B4- 10 355 163
- DE-C2- 19 737 276
- JP-A- H03 110 116
- US-A- 5 433 112
- US-A- 5 489 402
- US-A- 5 951 163
- W Michaeli ET AL: "Qualitätssicherung bei der Herstellung von Kunststoffmedienleitungen mittels der innovativen Wasserinjektionstechnik", , 30. Mai 2013 (2013-05-30), Seiten 1-211, XP055472747, Gefunden im Internet: URL:http://www.cleaner-production.de/filea dmin/assets/01RI05196_-_Abschlussbericht.p df [gefunden am 2018-05-04]
- MICHAELI W ET AL: "Ultrasonic investigations of the thermoplastics injection moulding process", POLYMER TESTING, ELSEVIER, AMSTERDAM, NL, Bd. 24, Nr. 2, 1. April 2005 (2005-04-01), Seiten 205-209, XP004695474, ISSN: 0142-9418, DOI: 10.1016/J.POLYMERTESTING.2004.08.009

## Beschreibung

Die Erfindung betrifft ein Werkzeug zur Kunststoffverarbeitung.

Werkzeuge zur Kunststoffverarbeitung sind in einer Vielzahl an funktionell wie auch konstruktiv unterschiedlichen Ausführungsformen dem Grunde nach aus dem Stand der Technik, beispielsweise aus US 5 951 163 A und DE 103 55 163 A1, bekannt.

Die funktionelle wie auch konstruktive Ausgestaltung entsprechender Werkzeuge bestimmt sich maßgeblich durch die konkrete Art der Kunststoffverarbeitung. Beispielsweise unterscheidet sich die funktionelle wie auch konstruktive Ausgestaltung eines Werkzeugs zur Verarbeitung spritzgießfähiger Kunststoffmaterialien von der funktionellen wie auch konstruktiven Ausgestaltung eines Werkzeugs zur Verarbeitung expandierbarer oder expandierter Kunststoffpartikelmaterialien.

Unabhängig von deren, wie erwähnt, maßgeblich die konkrete Art der Kunststoffverarbeitung bestimmten funktionellen wie auch konstruktiven Ausgestaltung besteht für alle Werkezeuge zur Kunststoffverarbeitung ein Bedarf einer Erweiterung des Funktionsumfangs dahin, dass für den jeweiligen Kunststoffverarbeitungsprozess werkzeug- oder prozessrelevante Parameter, insbesondere in-situ, ermittelbar sind. Mit anderen Worten besteht ein Bedarf nach einer Erweiterung des Funktionsumfangs entsprechender Werkzeuge zur Kunststoffverarbeitung im Hinblick auf die Möglichkeit einer, insbesondere in-situ, Ermittlung von werkzeug- oder prozessrelevante Parametern, anhand welchen z. B. ein besseres Verständnis über den jeweiligen Prozess zur Kunststoffverarbeitung sowie eine bessere Steuerung eines jeweiligen Prozesses zur Kunststoffverarbeitung möglich ist.

Der Erfindung liegt die Aufgabe zugrunde, ein, insbesondere im Hinblick auf die Möglichkeit einer, insbesondere in-situ, Ermittlung von werkzeug- oder prozessrelevante Parametern, verbessertes Werkzeug zur Kunststoffverarbeitung anzugeben.

Die Aufgabe wird durch ein Werkzeug zur Kunststoffverarbeitung gemäß Anspruch 1 gelöst.

Die hierzu abhängigen Ansprüche betreffen mögliche Ausführungsformen des Werkzeugs.

Das hierin beschriebene Werkzeug dient im Allgemeinen zur Kunststoffverarbeitung, d. h. zur Verarbeitung wenigstens eines Kunststoffmaterials. Die Verarbeitung des oder der Kunststoffmaterialien erfolgt typischerweise im Zusammenhang mit der Herstellung wenigstens eines aus dem oder den jeweiligen Kunststoffmaterial(ien) gebildeten Kunststoffbauteils. Das Werkzeug kann insofern auch als Werkzeug zur Herstellung eines durch Verarbeitung wenigstens eines Kunststoffmaterials hergestellten Kunststoffbauteils bezeichnet bzw. erachtet werden.

Mit dem Werkzeug lassen sich prinzipiell sämtliche Kunststoffmaterialien verarbeiten.

Lediglich beispielhaft sei auf thermoplastische Kunststoffmaterialien, elastomere Kunststoffmaterialien, duroplastische Kunststoffmaterialien sowie auf expandierbare bzw. schäumbare oder (vor)expandierte bzw. (vor)geschäumte Kunststoffpartikelmaterialien verwiesen. Bei dem Werkzeug kann es sich je nach konkret verarbeitbarem bzw. zu verarbeitenden Kunststoffmaterial sonach z. B. um ein Spritzgießwerkzeug zur Verarbeitung spritzgießfähiger, insbesondere thermoplastischer und/oder duroplastischer, Kunststoffmaterialien, um ein Extrusionswerkzeug zur Verarbeitung extrusionsfähiger, insbesondere thermoplastischer und/oder duroplastischer, Kunststoffmaterialien oder um ein Expansions- bzw. Schäumwerkzeug zur Verarbeitung expandierbarer bzw. schäumbarer oder (vor)expandierter bzw. (vor)geschäumter Kunststoffpartikelmaterialien handeln. Andere Ausführungsformen sind denkbar.

Das Werkzeug umfasst eine Anzahl an Werkzeugwandungen bzw. Werkzeugwandungsabschnitten, welche eine formgebende Kavität des Werkzeugs begrenzen. Entsprechende Werkzeugwandungen können z. B. als Bodenwandung, Seitenwandung oder Deckenwandung des Werkzeugs ausgebildet sein. Wenigstens eine Werkzeugwandung kann relativ zu wenigstens einer anderen Werkzeugwandung bewegbar gelagert sein. Derart kann eine Offenstellung des Werkzeugs, in welcher eine Zugangsmöglichkeit in die Kavität des Werkzeugs geschaffen ist, und eine Schließstellung des Werkzeugs, in welcher keine Zugangsmöglichkeit in die Kavität des Werkzeugs geschaffen ist, realisierbar.

Die Kavität des Werkzeugs ist zumindest abschnittsweise, insbesondere vollständig, mit einem vermittels des Werkzeugs verarbeitbaren bzw. zu verarbeitenden Kunststoffmaterial befüllbar. Die Formgebung der Kavität des Werkzeugs ist typischerweise im Hinblick auf die Form wenigstens eines vermittels des Werkzeugs herstellbaren bzw. herzustellenden Kunststoffbauteils gewählt.

Das Werkzeug umfasst weiterhin wenigstens ein Werkzeugelement, welches in einer hierfür vorgesehenen Aufnahme einer die Kavität des Werkzeugs begrenzenden Werkzeugwandung aufgenommen ist. Wenigstens eine Werkzeugwandung ist sonach mit wenigstens einer Aufnahme bzw. Aufnahmemöglichkeit für ein im Weiteren näher spezifiziertes Werkzeugelement ausgebildet. Die Aufnahme kann z. B. durch eine die jeweilige Werkzeugwandung zumindest abschnittsweise, insbesondere vollständig, durchsetzende Aufnahmebohrung ausgebildet sein. Aus der werkzeugwandungsseitigen Aufnahme(möglichkeit) für ein entsprechendes Werkzeugelement ergibt sich, dass es sich bei dem Werkzeugelement typischerweise um ein zu der dieses aufnehmenden Werkzeugwandung gesondertes Bauteil bzw. eine zu der dieses aufnehmenden Werkzeugwandung gesonderte Bauteilgruppe handelt.

Hinsichtlich seiner geometrisch-konstruktiven Ausführung kann das Werkzeugelement z. B. länglich, d. h. insbesondere stabartig bzw. -förmig respektive stiftartig bzw. -förmig ausgeführt sein, d. h. eine in einer länglichen Gestalt des Werkzeugelements resultierende längliche Erstreckung in einer oder mehreren Raumrichtungen aufweisen. Das Werkzeugelement kann auch plattenartig bzw. -förmig ausgeführt sein, d. h. eine in einer plattenartigen bzw. -förmigen Gestalt des Werkzeugelements resultierende flächige Erstreckung in unterschiedlichen Raumrichtungen aufweisen. Andere geometrischekonstruktive Ausführungen des Werkzeugelements sind denkbar.

Das Werkzeug umfasst ferner eine Schwingungserzeugungseinrichtung, welche wenigstens ein Schwingungserzeugungselement, welches zur Erzeugung von mechanischen Schwingungen (Vibrationen) eingerichtet ist, umfasst. Die von einem entsprechenden Schwingungserzeugungselement erzeugbaren bzw. erzeugten mechanischen Schwingungen weisen typischerweise eine bestimmte Amplitude und Frequenz bzw. einen bestimmten Amplituden- und Frequenzbereich und/oder eine bestimmte Laufzeit auf. Ein Schwingungserzeugungselement kann z. B. mechanische Schwingungen in einem Frequenzbereich zwischen 100 kHz und 10 MHz, insbesondere zwischen 100 kHz und 2 MHz, erzeugen. Bei den von einem entsprechenden Schwingungserzeugungselement erzeugbaren bzw. erzeugten mechanischen Schwingungen kann es sich insbesondere um Ultraschallwellen handeln. Ein entsprechendes Schwingungserzeugungselement kann insbesondere als ein piezoelektrisches Schwingungserzeugungselement, d. h. z. B. ein piezoelektrischer Aktor, ausgebildet sein oder wenigstens ein solches umfassen. Wie sich im Weiteren ergibt, kann ein entsprechendes Schwingungserzeugungselement insbesondere an oder in dem Werkzeugelement angeordnet oder ausgebildet sein.

Das Werkzeug umfasst ferner eine Erfassungseinrichtung, welche wenigstens ein Erfassungselement, welches zur Erfassung von von dem wenigstens einen Schwingungserzeugungselement erzeugten mechanischen Schwingungen eingerichtet ist. Ein entsprechendes Erfassungselement kann insbesondere als Sensorelement ausgebildet sein oder wenigstens ein solches umfassen. Da es sich bei den von einem entsprechenden Schwingungserzeugungselement erzeugbaren bzw. erzeugten mechanischen Schwingungen insbesondere um Ultraschallwellen handeln kann, kann es sich bei einem entsprechenden Erfassungselement insbesondere um einen Ultraschallsensor handeln. Ein entsprechendes Erfassungselement kann insbesondere als ein piezoelektrisches Sensorelement, d. h. z. B. ein piezoelektrischer Sensor, ausgebildet sein oder wenigstens ein solches umfassen. Wie sich im Weiteren ergibt, kann auch ein entsprechendes Erfassungselement insbesondere an oder in dem Werkzeugelement angeordnet oder ausgebildet sein.

Bei einem entsprechenden Schwingungserzeugungselement und einem entsprechenden Erfassungselement kann es sich um ein und dasselbe Bauteil handeln. Mithin kann ein Schwingungserzeugungselement und ein Erfassungselement in einem kombinierten Schwingungserzeugungs-Erfassungselement integriert sein. Dies gilt insbesondere für die Ausführung eines Schwingungserzeugungselements als piezoelektrischer Aktor und die Ausführung eines Erfassungselements als piezoelektrischer Sensor.

In allen Fällen lässt der Informationsgehalt der über ein jeweiliges Erfassungselement erfassbaren bzw. erfassten mechanischen Schwingungen, insbesondere der Änderungen der erfassbaren bzw. erfassten mechanischen Schwingungen zwischen einem durch ein Schwingungserzeugungselement gebildeten Schwingungserzeugungsbereich und einem durch ein Erfassungselement gebildeten Erfassungsbereich, Rückschlüsse auf werkzeug- oder prozessrelevante Parameter und somit auf im Rahmen des Betriebs des Werkzeugs herrschende Prozessbedingungen zu. Kenntnisse über entsprechende werkzeug- oder prozessrelevante Parameter sowie Prozessbedingungen stellen die Grundlage für ein besseres Verständnis über den jeweiligen Prozess zur Kunststoffverarbeitung sowie eine bessere Steuerung eines jeweiligen Prozesses zur Kunststoffverarbeitung dar. Durch das Vorsehen einer entsprechenden Schwingungserzeugungseinrichtung bzw. wenigstens eines entsprechenden Schwingungserzeugungselements sowie einer entsprechenden Erfassungseinrichtung bzw. wenigstens eines entsprechenden Erfassungselements ist eine Möglichkeit einer, insbesondere in-situ, Ermittlung von werkzeug- oder prozessrelevanten Parametern, gegeben.

Beispiele für entsprechende werkzeugrelevante Parameter sind die strukturellen Eigenschaften des Werkzeugs oder des Werkzeugelements, insbesondere die strukturelle Integrität des Werkzeugs oder des Werkzeugelements, der Grad bzw. Zustand der Schmierung eines zu schmierenden Bestandteils des Werkzeugs, d. h. z. B. eines zu schmierenden Werkzeugelements, sowie sämtliche chemische und/oder physikalische Eigenschaften des Werkzeugs oder des Werkzeugelements, d. h. z. B. die Temperatur des Werkzeugs oder des Werkzeugelements bzw. eine etwaige Verteilung der Temperatur des Werkzeugs oder des Werkzeugelements, den auf das Werkzeug oder das Werkzeugelement wirkenden Druck bzw. eine etwaige Verteilung des auf das Werkzeug oder das Werkzeugelement wirkenden Drucks, etc. Beispiele für entsprechende prozessrelevante Parameter sind der Füllstand der Kavität des Werkzeugs, das Fließverhalten eines in die Kavität des Werkzeugs einströmenden Kunststoffmaterials, das Verbindungs- bzw. Verfestigungsverhalten, insbesondere das Erstarrungsverhalten, eines in die Kavität des Werkzeugs einströmenden bzw. eingeströmten oder auf sonstige Weise eingebrachten Kunststoffmaterials, sowie sämtliche chemischen und/oder physikalischen Eigenschaften eines in der Kavität des Werkzeugs befindlichen Kunststoffmaterials, d. h. z. B. die Dichte des Kunststoffmaterials, der Druck des Kunststoffmaterials, die Temperatur des Kunststoffmaterials, etc.

Das Werkzeug kann eine hardware- und/oder softwaremäßig implementierte Steuereinrichtung umfassen, welche zur Steuerung der Erzeugung von mechanischen Schwingungen vermittels des wenigstens einen Schwingungserzeugungselements eingerichtet ist. Die Steuereinrichtung kann sonach zur Erzeugung von, insbesondere benutzerseitig, vorgebbaren bzw. vorgegebenen Steuerinformationen eingerichtet sein, welche die Erzeugung mechanischer Schwingungen bestimmter Schwingungseigenschaften, d. h. insbesondere bestimmter Amplitude und/oder Frequenz, betreffen. Entsprechende Steuerinformationen können auch eine gezielte Änderung bzw. Variation der Schwingungseigenschaften von zu erzeugenden bzw. erzeugten mechanischen Schwingungen betreffen.

Das Werkzeug kann eine hardware- und/oder softwaremäßig implementierte Auswerteeinrichtung umfassen, welche zur Auswertung der von dem wenigstens einen Erfassungselement erfassten mechanischen Schwingungen im Hinblick auf wenigstens einen Auswerteparameter eingerichtet ist. Ein entsprechender Auswerteparameter kann z. B. einen chemischen und/oder physikalischen Materialparameter eines vermittels des Werkzeugs durchführbaren Verarbeitungsprozesses verarbeiteten Kunststoffmaterials; und/oder einen Prozessparameter eines im Rahmen eines vermittels des Werkzeugs durchführbaren Verarbeitungsprozesses erfolgenden Teilprozesses, insbesondere eines Abkühl- und/oder Schäum- bzw. Expansions- und/oder Verfestigungs- und/oder Verbindungsprozesses eines mit dem Werkzeug verarbeitbaren Kunststoffmaterials; und/oder einen die strukturelle Integrität des Werkzeugs oder Werkzeugelements beschreibenden Integritätsparameter betreffen. Bei einem Auswerteparameter kann es sich sonach z. B. um einen entsprechenden prozess- und/oder werkzeugrelevanten Parameter handeln.

Insbesondere im Zusammenhang mit dem Einsatz von Einlegeteilen, d. h. z. B. Einlegeblechen, welche im Rahmen der Kunststoffverarbeitung regelmäßig zur Herstellung von Kunststoffverbundbauteilen eingesetzt werden, ist es auch denkbar, dass ein Auswerteparameter einen ein Vorhandensein eines in die Kavität eingelegten Einlegeteils und/oder eine Position eines in die Kavität eingelegten Einlegeteils betreffenden Einlegeteilparameter betrifft. Das Vorhandensein bzw. die Position eines entsprechenden Einlegeteils können einen Einfluss auf die von dem wenigstens einen Erfassungselement erfassten mechanischen Schwingungen haben, sodass diese auch einen "Aussagegehalt" bezüglich des Vorhandenseins bzw. der Position eines entsprechenden Einlegeteils haben können.

Die Auswerteeinrichtung kann wenigstens einen Auswertealgorithmus umfassen, welcher die erfassten mechanischen Schwingungen im Hinblick auf den wenigstens einen Auswerteparameter auswertet. Ein entsprechender Auswertealgorithmus kann z. B. Zusammenhänge zwischen erfassten Eigenschaften, d. h. z. B. einer erfassten Amplitude, Frequenz, Laufzeit, mechanischer Schwingungen und entsprechenden Auswerteparametern herstellen. Entsprechende Zusammenhänge können gegebenenfalls auf Grundlage von entsprechende Zusammenhänge beschreibenden Referenzdaten hergestellt werden.

Die Schwingungserzeugungseinrichtung und die Erfassungseinrichtung können einander fest oder variable zuordenbare oder zugeordnete Schwingungserzeugungselemente und Erfassungselemente umfassen. Mithin kann wenigstens ein bestimmtes Schwingungserzeugungselement wenigstens einem bestimmten Erfassungselement zugeordnet sein, und umgekehrt, sodass über das wenigstens eine bestimmte Schwingungserzeugungselement erzeugbare bzw. erzeugte mechanische Schwingungen, gegebenenfalls ausschließlich, über das wenigstens eine diesem zugeordnete Erfassungselement erfassbar sind. Eine entsprechende Zuordenbarkeit bzw. Zuordnung kann sich z. B. aus einer bestimmten räumlichen Anordnung und/oder Ausrichtung eines bestimmten Schwingungserzeugungselements relativ zu einem bestimmten Erfassungselement ergeben. Zwischen jeweiligen einander zuordenbaren bzw. zugeordneten Schwingungserzeugungselementen und Erfassungselementen ist typischerweise eine definierte Schwingungsübertragungsstrecke, über welche mechanische Schwingungen zwischen einem Schwingungserzeugungselement und einem Erfassungselement übertragen werden, gegeben.

Das wenigstens eine Schwingungserzeugungselement und das wenigstens eine Erfassungselement können an oder in gleichen oder unterschiedlichen Bereichen des Werkzeugs, insbesondere an oder in gleichen oder unterschiedlichen Bereichen einer gleichen Werkzeugwandung oder in gleichen oder unterschiedlichen Bereichen unterschiedlicher Werkzeugwandungen, angeordnet oder ausgebildet sein.

Je nach Anordnung relativ zu einem entsprechenden entsprechende mechanische Schwingungen erzeugenden Schwingungserzeugungselement kann ein entsprechendes Erfassungselement zur Erfassung von an einer Oberfläche, d. h. z. B. einer Werkzeugwandung oder einem innerhalb der Kavität des Werkzeugs befindlichen, gegebenenfalls innerhalb der Kavität des Werkzeugs, etwa im Rahmen eines Füllvorgangs der Kavität des Werkzeugs, strömenden, Kunststoffmaterial, reflektierte mechanische Schwingungen oder um nicht-reflektierte durch die Kavität des Werkzeugs transmittierte mechanische Schwingungen eingerichtet sein. Ein entsprechendes Erfassungselement kann sonach derart relativ zu einem entsprechenden Schwingungserzeugungselement angeordnet oder ausgebildet sein, dass es von dem Schwingungserzeugungselement erzeugte, an einer Oberfläche reflektierte mechanische Schwingungen erfassen kann, oder derart relativ zu dem Schwingungserzeugungselement angeordnet oder ausgebildet sein, dass es nicht-reflektierte durch die Kavität des Werkzeugs transmittierte mechanische Schwingungen erfassen kann. In dem ersten Fall können das Schwingungserzeugungselement und das Erfassungselement beispielsweise in der gleichen Werkzeugwandung bzw. im Bereich der gleichen Werkzeugwandung angeordnet oder ausgebildet sein, in dem zweiten Fall können das Schwingungserzeugungselement und das Erfassungselement beispielsweise an oder in einander gegenüber liegenden Werkzeugwandungen angeordnet oder ausgebildet sein.

Das wenigstens eine Schwingungserzeugungselement kann derart angeordnet oder ausgebildet sein, mechanische Schwingungen zu erzeugen, welche sich zumindest abschnittsweise durch die Kavität des Werkzeugs ausbreiten, und/oder derart angeordnet oder ausgebildet sein, mechanische Schwingungen zu erzeugen, welche sich zumindest abschnittsweise durch wenigstens eine Werkzeugwandung und/oder durch das wenigstens eine Werkzeugelement ausbreiten, und/oder derart angeordnet oder ausgebildet sein, mechanische Schwingungen zu erzeugen, welche sich zumindest abschnittsweise entlang einer zumindest abschnittsweise freiliegenden Fläche wenigstens einer Werkzeugwandung und/oder entlang einer zumindest abschnittsweise freiliegenden Fläche des wenigstens einen Werkzeugelements erstrecken. Vermittels eines entsprechenden Schwingungserzeugungselements lassen sich sonach im Hinblick auf das Ausbreitungsmedium, in welchem sich diese ausbreiten, unterschiedliche mechanische Schwingungen erzeugen; wie sich aus vorstehenden Ausführungen ergibt, können sich die mechanischen Schwingungen durch einen Festkörper, nämlich durch wenigstens eine jeweilige Werkzeugwandung oder durch ein innerhalb der Kavität des Werkzeugs befindliches Kunststoffmaterial, oder entlang eines Festkörpers, nämlich entlang wenigstens einer jeweiligen Werkzeugwandung oder entlang eines innerhalb der Kavität des Werkzeugs befindlichen Kunststoffmaterials, oder durch die (ungefüllte) Kavität des Werkzeugs ausbreiten. Bei den mechanischen Schwingungen kann es sich sonach z. B. um sich durch ein Volumen ausbreitende Volumenschwingungen oder entlang einer Oberfläche ausbreitende Oberflächenschwingungen handeln.

Es ist möglich, dass sich mechanische Schwingungen im Rahmen ihrer Ausbreitung durch unterschiedliche Ausbreitungsmedien ausbreiten; mechanische Schwingungen können sich demnach beispielsweise zunächst durch einen Festkörper, d. h. z. B. durch das Werkzeugelement oder eine Werkzeugwandung, und sodann durch die (ungefüllte) Kavität des Werkzeugs ausbreiten, oder umgekehrt, zunächst durch die (ungefüllte) Kavität des Werkzeugs und sodann durch einen Festkörper, d. h. d. h. z. B. durch das Werkzeugelement oder eine Werkzeugwandung, ausbreiten, oder zunächst durch einen ersten Festkörper, d. h. z. B. durch das Werkzeugelement oder eine Werkzeugwandung, und sodann durch einen zweiten Festkörper, d. h. z. B. durch ein innerhalb der Kavität des Werkzeugs befindliches Kunststoffmaterial, oder umgekehrt, ausbreiten. Im Zusammenhang mit in der Kavität des Werkzeugs befindlichem Kunststoffmaterial ist es denkbar, dass sich mechanische Schwingungen durch einen nicht verfestigten Anteil des Kunststoffmaterials, d. h. z. B. einen schmelzflüssigen Anteil des Kunststoffmaterials, und/oder durch einen nach Verfestigung eines nicht verfestigten Anteils des Kunststoffmaterials gebildeten verfestigten Anteil des Kunststoffmaterials, d. h. z. B. einen nach Erstarren eines schmelzflüssigen Anteils des Kunststoffmaterials gebildeten erstarrten Anteil des Kunststoffmaterials, ausbreiten.

Es wurde erwähnt, dass das wenigstens eine Schwingungserzeugungselement und das wenigstens eine Erfassungselement an oder in gleichen oder unterschiedlichen Bereichen des Werkzeugs, insbesondere an oder in gleichen oder unterschiedlichen Bereichen einer gleichen Werkzeugwandung oder in gleichen oder unterschiedlichen Bereichen unterschiedlicher Werkzeugwandungen, angeordnet oder ausgebildet sein können. Analoges gilt für die Anordnung des oder wenigstens einen Schwingungserzeugungseinrichtung sowie des oder wenigstens eines Erfassungselements an oder in dem Werkzeugelement. Das oder wenigstens ein Schwingungserzeugungselement und das oder wenigstens ein Erfassungselement können sonach jeweils an oder in dem wenigstens einen Werkzeugelement angeordnet oder ausgebildet sein. Dabei ist es z. B. möglich, dass das wenigstens eine Schwingungserzeugungselement und/oder das wenigstens eine Erfassungselement im Bereich eines der Kavität des Werkzeugs abgewandten oder zugewandten freien Endes des Werkzeugelements angeordnet oder ausgebildet ist bzw. sind. Die konkrete Anordnung des Schwingungserzeugungselements und des Erfassungselements an oder in dem Werkzeugelement entscheidet darüber, ob bzw. inwieweit sich erzeugte mechanische Schwingungen durch das Werkzeugelement ausbreiten, was wiederum darüber entscheiden kann, welche Informationen sich aus den erfassten mechanischen Schwingungen über strukturelle Eigenschaften, insbesondere die strukturelle Integrität, des Werkzeugelements herleiten lassen.

Das Werkzeugelement kann grundsätzlich unabhängig von der konkreten Anordnung des wenigstens einen Schwingungserzeugungselements und des wenigstens einen Erfassungselements an oder in dem Werkzeugelement wenigstens einen Einkopplungsbereich, über welchen seitens des Schwingungserzeugungselements erzeugte mechanische Schwingungen in das Werkzeugelement einkoppelbar sind, und wenigstens einen Auskopplungsbereich, über welchen über den Einkopplungsbereich in das Werkzeugelement eingekoppelte mechanische Schwingungen aus dem Werkzeug auskoppelbar sind, umfassen. Der Einkopplungsbereich und der Auskopplungsbereich können an gleichen oder unterschiedlichen Bereichen des Werkzeugelements, d. h. insbesondere an gleichen oder unterschiedlichen freien Enden eines länglichen, d. h. insbesondere stabartigen bzw. -förmigen respektive stiftartigen bzw. -förmigen Werkzeugelements, vorgesehen sein.

Der Auskopplungsbereich und der Einkopplungsbereich können durch denselben Abschnitt gebildet sein; mithin sind kombinierte Aus- und Einkopplungsbereiche denkbar. Insbesondere können über den oder einen Auskopplungsbereich gegebenenfalls auch reflektierte mechanischen Schwingungen eingekoppelt werden. Über die Auswertung reflektierter eingekoppelter mechanischer Schwingungen ist insbesondere eine Bestimmung von mechanischen Parametern sowie Druck und Temperatur möglich.

Ein Auskopplungsbereich kann z. B. auch über die bzw. im Bereich einer Aufnahme für das Werkzeugelement gegeben sein. Derart lassen sich mechanische Schwingungen in die Werkzeugwandungen einbringen über deren Auswertung - ja nach Art der Schwingung - z. B. Informationen über einen der Schmierung des Werkzeugelements 6 dienenden Schmierfilm im Bereich der der Aufnahme erhalten lassen. Entsprechende Informationen können konkret z. B. eine Überwachung des Schmierfilms, d. h. insbesondere dessen Güte, ermöglichen.

Der Auskopplungsbereich, über welchen über den Einkopplungsbereich in das Werkzeugelement eingekoppelte mechanische Schwingungen aus dem Werkzeugelement auskoppelbar sind, kann auch in einem in einem hierfür vorgesehenen Aufnahmebereich des Werkzeugelements angeordneten oder ausgebildeten Werkzeugelementeinsatzelement angeordnet oder ausgebildet sein. Das Werkzeugelement kann sonach einen gesondert in einen in einem Grundkörper des Werkzeugelements vorgesehenen Aufnahmebereich einsetzbares bzw. eingesetztes Werkzeugelementeinsatzelement umfassen, wobei der Auskopplungsbereich an oder in dem Werkzeugelementeinsatzelement vorgesehen ist.

Das Werkzeugelementeinsatzelement kann, insbesondere zur Beeinflussung der Eigenschaften der aus dem Werkzeugelement auskoppelbaren mechanischen Schwingungen, aus einem anderen Material ausgebildet sein als das übrige Werkzeugelement. Beispielsweise ist eine Ausführung des Werkzeugelementeinsatzelements aus einem anderen Metall als das übrige Werkzeugelement denkbar. Das Werkzeugelementeinsatzelement kann z. B. aus einem im Vergleich weicheren Metall bzw. einer weicheren Metalltype als das übrige Werkzeugelement ausgebildet sein. Das Werkzeugelementeinsatzelement kann z. B. aus Kupfer ausgebildet sein, während das übrige Werkzeugelement aus Stahl ausgebildet ist.

Alternativ zu der Ausführungsform, wonach das oder wenigstens ein Schwingungserzeugungselement und das oder wenigstens ein Erfassungselement jeweils an oder in dem wenigstens einen Werkzeugelement angeordnet oder ausgebildet sind, ist es auch denkbar, dass (nur) das oder wenigstens ein Schwingungserzeugungselement an oder in dem Werkzeugelement angeordnet oder ausgebildet ist und das oder wenigstens ein Erfassungselement an oder in einem hiervon räumlich getrennt angeordneten, insbesondere dem Werkzeugelement gegenüber liegend angeordneten, Abschnitt einer Werkzeugwandung des Werkzeugs angeordnet oder ausgebildet ist. Selbstverständlich ist eine umgekehrte Konfiguration, wonach (nur) das oder wenigstens ein Erfassungselement an oder in dem Werkzeugelement angeordnet oder ausgebildet ist und das oder wenigstens ein Schwingungserzeugungselement an oder in einem hiervon räumlich getrennt angeordneten, insbesondere dem Werkzeugelement gegenüber liegend angeordneten, Abschnitt einer Werkzeugwandung des Werkzeugs angeordnet oder ausgebildet ist, ebenso denkbar.

Das Werkzeug bzw. das Werkzeugelement kann mehrere Schwingungserzeugungselemente umfassen, welche sich in den Eigenschaften der über diese jeweils erzeugbaren mechanischen Schwingungen gleichen oder unterscheiden. In analoger Weise kann das Werkzeug bzw. das Werkzeugelement mehrere Erfassungselemente umfassen, welche sich in den Eigenschaften der über diese jeweils erfassbaren mechanischen Schwingungen gleichen oder unterscheiden. Das Vorsehen mehrerer Schwingungserzeugungselemente und mehrerer Erfassungselemente bedingt zunächst, dass bei einem etwaigen Ausfall eines Schwingungserzeugungselements bzw. eines Erfassungselements weiterhin ein Erzeugen und Erfassen mechanischer Schwingungen möglich ist. Weiterhin ermöglicht das Vorsehen mehrerer Schwingungserzeugungselemente und mehrerer Erfassungselemente eine genauere Information über jeweilige prozess- bzw. werkzeugrelevante Parameter, sodass z. B. eine Plausibilisierung jeweiliger prozess- bzw. werkzeugrelevanter Parameter möglich ist. Auch ist eine orts- und/oder zeitaufgelöste Ermittlung jeweiliger prozess- bzw. werkzeugrelevanter Parameter möglich.

Die weiter oben erwähnte Auswerteinrichtung kann sonach insbesondere eingerichtet sein, einen entsprechenden Auswerteparameter örtlich, insbesondere bezogen auf das Volumen der Kavität des Werkzeugs, und/oder zeitlich, insbesondere bezogen auf wenigstens einen im Rahmen des vermittels des Werkzeugs durchführbaren Verarbeitungsprozesses erfolgenden Teilprozess, insbesondere einen Abkühl- und/oder Verbindungs- und/oder Verfestigungsprozess eines mit dem Werkzeug verarbeitbaren Kunststoffmaterials, aufzulösen. Es kann sonach ein örtlich und/oder zeitlich veränderlicher Verlauf eines entsprechenden Auswerteparameters ermittelt werden.

Sofern das Werkzeug mehrere Schwingungserzeugungselemente und/oder Erfassungselemente umfasst, können diese entlang wenigstens einer Werkzeugwandung gleichmäßig oder ungleichmäßig verteilt angeordnet oder ausgebildet sein. Insbesondere können mehrere Schwingungserzeugungselemente und/oder Erfassungselemente entlang einer im Rahmen eines Füllvorgangs der Kavität mit einem mit dem Werkzeug verarbeitbaren Kunststoffmaterial, insbesondere einer Kunststoffschmelze, sukzessive mit Kunststoffmaterial beaufschlagten Werkzeugwandung verteilt angeordnet oder ausgebildet sein. Eine derartige Anordnung kann die erwähnte orts- und/oder zeitaufgelöste Ermittlung jeweiliger prozess- bzw. werkzeugrelevanter Parameter ermöglichen. Selbstverständlich können in analoger Weise auch seitens des Werkzeugelements mehrere Schwingungserzeugungselemente und Erfassungselemente in gleichmäßig oder ungleichmäßig verteilter Anordnung vorhanden sein.

Das wenigstens eine Werkzeugelement kann in wenigstens einem, insbesondere translatorischen, Bewegungsfreiheitsgrad, insbesondere zwischen einer ersten Betriebsstellung, insbesondere einer eingefahrenen Stellung, in welcher das Werkzeugelement nicht in das freie Volumen der Kavität bewegt ist, und einer zweiten Betriebsstellung, insbesondere einer ausgefahrenen Stellung, in welcher das Werkzeugelement zumindest abschnittsweise in das freie Volumen der Kavität bewegt ist, und umgekehrt, bewegbar gelagert sein. Zur Umsetzung von Bewegungen des Werkzeugelements zwischen jeweiligen Betriebsstellungen kann dem Werkzeug eine wenigstens ein mit dem Werkzeugelement direkt oder indirekt (bewegungs)gekoppeltes Antriebselement umfassende, z. B. hydraulisch oder pneumatische, Antriebseinrichtung zugeordnet sein.

Bei einem entsprechend bewegbar gelagerten Werkzeugelement kann es sich insbesondere um ein Auswerfer- oder Schieberelement handeln. Ein entsprechend bewegbar gelagertes Werkzeugelement kann sonach als Auswerfer- oder Schieberelement ausgebildet sein oder ein Auswerfer- oder Schieberelement umfassen.

Die Erfindung betrifft neben dem Werkzeug auch eine diesem übergeordnete Vorrichtung zur Verarbeitung von Kunststoffmaterialien. Die Vorrichtung, welche sonach z. B. als Spritzgießvorrichtung, als Extrusionsvorrichtung oder als Schäumvorrichtung ausgebildet sein kann, umfasst wenigstens ein wie hierin beschriebenes Werkzeug. Sämtliche Ausführungen im Zusammenhang mit dem Werkzeug gelten analog für die Vorrichtung.

Die Erfindung betrifft weiterhin ein Verfahren zur Verarbeitung von Kunststoffmaterialien, insbesondere ein Spritzgießverfahren, ein Extrusionsverfahren oder ein Schäumverfahren. Das Verfahren zeichnet sich dadurch aus, dass wenigstens ein wie hierin beschriebenes Werkzeug oder wenigstens eine wie hierin beschriebene Vorrichtung zur Durchführung des Verfahrens verwendet wird. Sämtliche Ausführungen im Zusammenhang mit dem Werkzeug gelten auch analog für das Verfahren. Im Rahmen des Verfahrens können durch entsprechende Erfassung und Auswertung von mechanischen Schwingungen Auswerteparameter, d. h. insbesondere prozess- und/oder werkzeugrelevante Parameter, ermittelt werden.

Die Erfindung ist anhand von Ausführungsbeispielen in den Zeichnungen näher erläutert. Dabei zeigt:

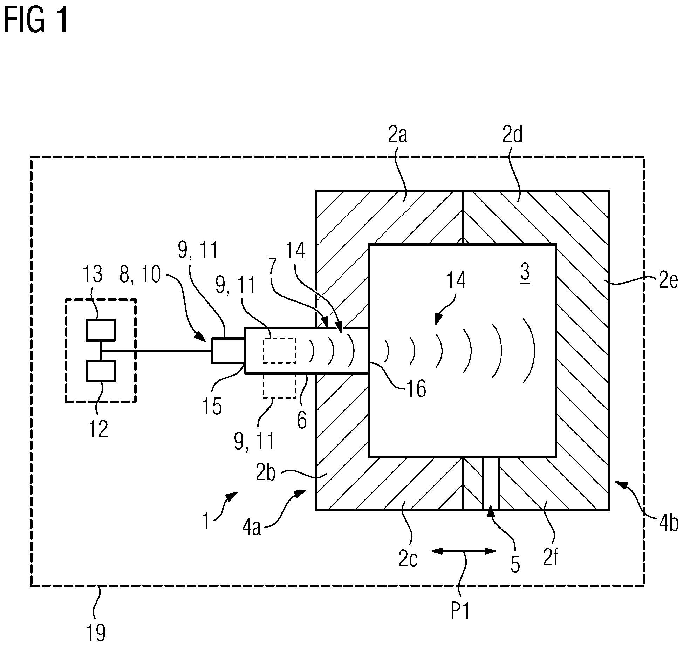

- Fig. 1 - 4: je eine Prinzipdarstellung eines Werkzeugs gemäß einem Ausführungsbeispiel.

Fig. 1 zeigt eine Prinzipdarstellung eines Werkzeugs 1 gemäß einem Ausführungsbeispiel in einer geschnittenen Ansicht. Das Werkzeug 1 dient im Allgemeinen zur Kunststoffverarbeitung, d. h. zur Verarbeitung wenigstens eines Kunststoffmaterials. Die Verarbeitung des oder der Kunststoffmaterialien erfolgt typischerweise im Zusammenhang mit der Herstellung wenigstens eines aus dem oder den jeweiligen Kunststoffmaterial(ien) gebildeten Kunststoffbauteils. Das Werkzeug 1 kann insofern auch als Werkzeug 1 zur Herstellung eines durch Verarbeitung wenigstens eines Kunststoffmaterials hergestellten Kunststoffbauteils bezeichnet bzw. erachtet werden.

Mit dem Werkzeug 1 lassen sich prinzipiell sämtliche Kunststoffmaterialien verarbeiten. Lediglich beispielhaft sei auf thermoplastische Kunststoffmaterialien, elastomere Kunststoffmaterialien, duroplastische Kunststoffmaterialien sowie auf expandierbare bzw. schäumbare oder (vor)expandierte bzw. (vor)geschäumte Kunststoffpartikelmaterialien verwiesen. Bei dem Werkzeug 1 kann es sich je nach konkret verarbeitbarem bzw. zu verarbeitenden Kunststoffmaterial sonach z. B. um ein Spritzgießwerkzeug zur Verarbeitung spritzgießfähiger, insbesondere thermoplastischer und/oder duroplastischer, Kunststoffmaterialien, um ein Extrusionswerkzeug zur Verarbeitung extrusionsfähiger, insbesondere thermoplastischer und/oder duroplastischer, Kunststoffmaterialien oder um ein Expansions- bzw. Schäumwerkzeug zur Verarbeitung expandierbarer bzw. schäumbarer oder (vor)expandierter bzw. (vor)geschäumter Kunststoffpartikelmaterialien handeln.

Das in den in den Fig. gezeigten Ausführungsbeispielen jeweils beispielhaft zweiteilig ausgeführte Werkzeug 1 umfasst eine Anzahl an Werkzeugwandungen 2a - 2f, welche eine formgebende Kavität 3 des Werkzeugs 1 begrenzen. Die Kavität 3 ist zumindest abschnittsweise, insbesondere vollständig, mit einem vermittels des Werkzeugs 1 verarbeitbaren bzw. zu verarbeitenden Kunststoffmaterial befüllbar. Die Formgebung der Kavität 3 ist typischerweise im Hinblick auf die Form wenigstens eines vermittels des Werkzeugs 1 herstellbaren bzw. herzustellenden Kunststoffbauteils gewählt.

Die, wie erwähnt, beispielhaft zweiteilige Ausführung des Werkzeugs 1 umfasst zwei Werkzeughälften 4a, 4b, wobei die erste Werkzeughälfte 4a durch die Werkzeugwandungen 2a - 2c und die zweite Werkzeughälfte 4b durch die Werkzeugwandungen 2d - 2f gebildet ist. Ersichtlich können entsprechende Werkzeugwandungen 2a - 2f als Bodenwandung, vgl. Werkzeugwandungen 2c, 2f, Seitenwandung, vgl. Werkzeugwandungen 2b, 2e, oder Deckenwandung, vgl. Werkzeugwandungen 2a, 2d, ausgebildet sein. In der Werkzeugwandung 2e ist beispielhaft eine vermittels einer Schließeinrichtung (nicht gezeigt) verschließbare Öffnung 5 zur Einbringung eines vermittels des Werkzeugs 1 zu verarbeitenden Kunststoffmaterials in die Kavität 3 angedeutet; eine entsprechende Öffnung 5 könnte auch an einer anderen Werkzeugwandung 2a - 2d, 2f ausgebildet sein.

Die beiden Werkzeughälften 4a, 4b sind, wie durch den Doppelpfeil P1 angedeutet, relativ zueinander bewegbar gelagert; mithin sind auch die Werkzeugwandungen 2a - 2c relativ zu den Werkzeugwandungen 2d - 2f bewegbar gelagert. Derart kann eine Offenstellung des Werkzeugs 1, in welcher eine Zugangsmöglichkeit in die Kavität 3 geschaffen ist, und eine in den Fig. gezeigte Schließstellung des Werkzeugs 1, in welcher keine Zugangsmöglichkeit in die Kavität 3 geschaffen ist, realisierbar.

Das Werkzeug 1 umfasst weiterhin wenigstens ein Werkzeugelement 6, welches in einer hierfür vorgesehenen Aufnahme 7 der Werkzeugwandung 2b aufgenommen ist; eine entsprechende Aufnahme 7 könnte auch in einer anderen Werkzeugwandung 2a, 2c - 2f ausgebildet sein. Wenigstens eine Werkzeugwandung 2a - 2f ist sonach mit wenigstens einer Aufnahme 7 bzw. Aufnahmemöglichkeit für ein entsprechendes Werkzeugelement 6 ausgebildet. Die Aufnahme 7 ist durch eine die Werkzeugwandung 2a durchsetzende Aufnahmebohrung ausgebildet. Aus der werkzeugwandungsseitigen Aufnahme(möglichkeit) für ein entsprechendes Werkzeugelement ist ersichtlich, dass es sich bei dem Werkzeugelement 6 um ein zu der dieses aufnehmenden Werkzeugwandung 2b gesondertes Bauteil bzw. eine zu der dieses aufnehmenden Werkzeugwandung 2b gesonderte Bauteilgruppe handelt.

Hinsichtlich seiner geometrisch-konstruktiven Ausführung ist das Werkzeugelement 6 in den in den Fig. gezeigten Ausführungsbeispielen beispielhaft länglich, d. h. insbesondere stabartig bzw. -förmig respektive stiftartig bzw. -förmig ausgeführt; das Werkzeugelement 6 weist sonach eine in einer länglichen Gestalt resultierende längliche Erstreckung auf. Das Werkzeugelement 6 könnte jedoch z. B. auch plattenartig bzw. -förmig ausgeführt sein, d. h. eine in einer plattenartigen bzw. -förmigen Gestalt des Werkzeugelements 6 resultierende flächige Erstreckung aufweisen.

Das Werkzeugelement 6 ist in den in den Fig. gezeigten Ausführungsbeispielen in einem Bewegungsfreiheitsgrad zwischen einer in den Fig. gezeigten ersten Betriebsstellung, d. h. einer eingefahrenen Stellung, in welcher das Werkzeugelement 6 nicht in das freie Volumen der Kavität 3 bewegt ist, und einer zweiten Betriebsstellung, d. h. einer ausgefahrenen Stellung, in welcher das Werkzeugelement 6 zumindest abschnittsweise in das freie Volumen der Kavität 3 bewegt ist, und umgekehrt, bewegbar gelagert. Zur Umsetzung von Bewegungen des Werkzeugelements 6 zwischen jeweiligen Betriebsstellungen kann dem Werkzeug 1 eine wenigstens ein mit dem Werkzeugelement 6 direkt oder indirekt (bewegungs)gekoppeltes Antriebselement (nicht gezeigt) umfassende, z. B. hydraulisch oder pneumatische, Antriebseinrichtung (nicht gezeigt) zugeordnet sein.

Bei dem Werkzeugelement 6 handelt es sich in den in den Fig. gezeigten Ausführungsbeispielen um ein entsprechend bewegbar gelagertes Auswerferelement oder um ein Schieberelement.

Das Werkzeug 1 umfasst ferner eine Schwingungserzeugungseinrichtung 8, welche ein Schwingungserzeugungselement 9, welches zur Erzeugung von mechanischen Schwingungen 14 (Vibrationen) eingerichtet ist, umfasst. Das Schwingungserzeugungselement 9 ist in dem in Fig. 1 gezeigten Ausführungsbeispiel beispielhaft im Bereich eines der Kavität 3 abgewandten freien Endes des Werkzeugelements 6 angeordnet oder ausgebildet. Wie gestrichelt dargestellt, könnte das oder ein weiteres Schwingungserzeugungselement 9 jedoch auch an einer freiliegenden Fläche des Werkzeugelements 6 und/oder in dem Werkzeugelement 6 angeordnet oder ausgebildet sein.

Die von dem Schwingungserzeugungselement 9 erzeugbaren bzw. erzeugten mechanischen Schwingungen 14 weisen eine bestimmte Amplitude und Frequenz bzw. einen bestimmten Amplituden- und Frequenzbereich und/oder eine bestimmte Laufzeit auf. Das Schwingungserzeugungselement 9 kann z. B. mechanische Schwingungen 14 in einem Frequenzbereich zwischen 100 kHz und 10 MHz, insbesondere zwischen 100 kHz und 2 MHz, erzeugen. Bei den von dem Schwingungserzeugungselement 9 erzeugbaren bzw. erzeugten mechanischen Schwingungen 14 handelt es sich in den in den Fig. gezeigten Ausführungsbeispielen um Ultraschallwellen. Das Schwingungserzeugungselement 9 ist in den in den Fig. gezeigten Ausführungsbeispielen als ein piezoelektrisches Schwingungserzeugungselement (piezoelektrischer Aktor) ausgebildet.

Das Werkzeug 1 umfasst ferner eine Erfassungseinrichtung 10, welche ein Erfassungselement 11, welches zur Erfassung von von dem Schwingungserzeugungselement 9 erzeugten mechanischen Schwingungen 14 eingerichtet ist. Das Erfassungselement 11 ist als Sensorelement ausgebildet. Da es sich bei den von dem Schwingungserzeugungselement 9 erzeugbaren bzw. erzeugten mechanischen Schwingungen 14 um Ultraschallwellen handelt, handelt es sich bei dem Erfassungselement 11 um einen Ultraschallsensor. Das Erfassungselement 11 ist in dem in Fig. 1 gezeigten Ausführungsbeispiel als ein piezolelektrischer Sensorelement (piezoelektrischer Sensor) ausgebildet.

Bei dem in Fig. 1 gezeigten Ausführungsbeispiel handelt es sich bei dem Schwingungserzeugungselement 9 und dem Erfassungselement 11 um ein und dasselbe Bauteil. Mithin ist das Schwingungserzeugungselement 9 und das Erfassungselement 11, hier beispielhaft in Form eines kombinierten piezoelektrischen Aktor-Sensors, in einem kombinierten Schwingungserzeugungs-Erfassungselement integriert.

Grundsätzlich können das Schwingungserzeugungselement 9 und das Erfassungselement 11 jeweils an oder in dem Werkzeugelement 6 angeordnet oder ausgebildet sein. Dabei ist es z. B. möglich, dass das Schwingungserzeugungselement 9 und/oder das Erfassungselement 11 im Bereich eines der Kavität 3 abgewandten oder zugewandten freien Endes des Werkzeugelements 6 angeordnet oder ausgebildet ist bzw. sind. Die konkrete Anordnung des Schwingungserzeugungselements 9 und des Erfassungselements 11 an oder in dem Werkzeugelement 6 entscheidet darüber, ob bzw. inwieweit sich erzeugte mechanische Schwingungen 14 durch das Werkzeugelement 6 ausbreiten, was wiederum darüber entscheiden kann, welche Informationen sich aus den erfassten mechanischen Schwingungen 14 über strukturelle Eigenschaften, insbesondere die strukturelle Integrität, des Werkzeugelements 6 herleiten lassen.

Das Werkzeugelement 6 kann grundsätzlich unabhängig von der konkreten Anordnung des Schwingungserzeugungselements 9 und des Erfassungselements 11 einen Einkopplungsbereich 15, über welchen seitens des Schwingungserzeugungselements 9 erzeugte mechanische Schwingungen 14 in das Werkzeugelement 6 einkoppelbar sind, und wenigstens einen Auskopplungsbereich 16, über welchen über den Einkopplungsbereich 15 in das Werkzeugelement 6 eingekoppelte mechanische Schwingungen 14 aus dem Werkzeugelement 6 auskoppelbar sind, umfassen. Der Einkopplungsbereich 15 und der Auskopplungsbereich 16 können an gleichen oder - wie in dem Ausführungsbeispiel gemäß Fig. 1 - unterschiedlichen Bereichen des Werkzeugelements 6, d. h. insbesondere an gleichen oder unterschiedlichen freien Enden des Werkzeugelements 6, vorgesehen sein.

Ein weiterer Auskopplungsbereich 16 kann über die bzw. im Bereich der Aufnahme 7 gegeben sein. Derart lassen sich mechanische Schwingungen 14 in die Werkzeugwandungen 2a - 2f einbringen über deren Auswertung - ja nach Art der Schwingung - z. B. Informationen über einen der Schmierung des Werkzeugelements 6 dienenden Schmierfilm im Bereich der der Aufnahme 7 erhalten lassen. Entsprechende Informationen können konkret z. B. eine Überwachung des Schmierfilms, d. h. insbesondere dessen Güte, ermöglichen.

Der Informationsgehalt der über das Erfassungselement 11 erfassbaren bzw. erfassten mechanischen Schwingungen 14, insbesondere der Änderungen der erfassbaren bzw. erfassten mechanischen Schwingungen 14 zwischen einem durch das Schwingungserzeugungselement 9 gebildeten Schwingungserzeugungsbereich und einem durch das Erfassungselement 11 gebildeten Erfassungsbereich, Rückschlüsse auf werkzeug- oder prozessrelevante Parameter und somit auf im Rahmen des Betriebs des Werkzeugs 1 herrschende Prozessbedingungen zu. Durch das Vorsehen der Schwingungserzeugungseinrichtung 8 sowie der Erfassungseinrichtung 10 ist eine Möglichkeit einer, insbesondere in-situ, Ermittlung von werkzeug- oder prozessrelevanten Parametern, gegeben.

Beispiele für entsprechende werkzeugrelevante Parameter sind die strukturellen Eigenschaften des Werkzeugs 1, insbesondere die strukturelle Integrität des Werkzeugs 1, der Grad bzw. Zustand der Schmierung eines zu schmierenden Bestandteils des Werkzeugs 6, d. h. z. B. des typischerweise zu schmierenden Werkzeugelements 6, sowie sämtliche chemische und/oder physikalische Eigenschaften des Werkzeugs 1, d. h. z. B. die Temperatur des Werkzeugs 1 oder des Werkzeugelements 6 bzw. eine etwaige Verteilung der Temperatur des Werkzeugs 1 oder des Werkzeugelements 6, den auf das Werkzeug 1 oder das Werkzeugelement 6 wirkenden Druck bzw. eine etwaige Verteilung des auf das Werkzeug 1 oder das Werkzeugelement 6 wirkenden Drucks, etc. Beispiele für entsprechende prozessrelevante Parameter sind der Füllstand der Kavität 3, das Fließverhalten eines in die Kavität 3 einströmenden Kunststoffmaterials, das Verbindungs- oder Verfestigungsverhalten, insbesondere das Erstarrungsverhalten, eines in die Kavität 3 einströmenden bzw. eingeströmten oder auf sonstige Weise eingebrachten Kunststoffmaterials, sowie sämtliche chemischen und/oder physikalischen Eigenschaften eines in der Kavität 3 befindlichen Kunststoffmaterials, d. h. z. B. die Dichte des Kunststoffmaterials, der Druck des Kunststoffmaterials, die Temperatur des Kunststoffmaterials, etc.

Das Werkzeug 1 umfasst eine hardware- und/oder softwaremäßig implementierte Steuereinrichtung 12, welche zur Steuerung der Erzeugung von mechanischen Schwingungen vermittels des Schwingungserzeugungselements 9 eingerichtet ist. Die Steuereinrichtung 12 ist sonach zur Erzeugung von, insbesondere benutzerseitig, vorgebbaren bzw. vorgegebenen Steuerinformationen eingerichtet, welche die Erzeugung mechanischer Schwingungen bestimmter Schwingungseigenschaften, d. h. insbesondere bestimmter Amplitude und/oder Frequenz, betreffen. Entsprechende Steuerinformationen können auch eine gezielte Änderung bzw. Variation der Schwingungseigenschaften von zu erzeugenden bzw. erzeugten mechanischen Schwingungen betreffen.

Das Werkzeug 1 umfasst ferner eine hardware- und/oder softwaremäßig implementierte Auswerteeinrichtung 13, welche zur Auswertung der von dem Erfassungselement 11 erfassten mechanischen Schwingungen im Hinblick auf wenigstens einen Auswerteparameter eingerichtet ist. Ein entsprechender Auswerteparameter kann z. B. einen chemischen und/oder physikalischen Materialparameter eines im Rahmen des vermittels des Werkzeugs 1 durchführbaren Verarbeitungsprozesses verarbeiteten Kunststoffmaterials betreffen; und/oder einen Prozessparameter eines im Rahmen des vermittels des Werkzeugs 1 durchführbaren Verarbeitungsprozesses erfolgenden Teilprozesses, insbesondere eines Abkühl- und/oder Schäum- bzw. Expansions- und/oder Verfestigungs- und/oder Verbindungsprozesses eines mit dem Werkzeug 1 verarbeitbaren Kunststoffmaterials; und/oder einen die strukturelle Integrität des Werkzeugs 1 oder Werkzeugelements 6 beschreibenden Integritätsparameter betreffen. Bei einem Auswerteparameter kann es sich sonach z. B. um einen entsprechenden prozess- und/oder werkzeugrelevanten Parameter handeln.

Die Auswerteeinrichtung 13 umfasst typischerweise wenigstens einen Auswertealgorithmus, welcher die erfassten mechanischen Schwingungen im Hinblick auf einen oder mehrere Auswerteparameter auswertet. Ein entsprechender Auswertealgorithmus kann z. B. Zusammenhänge zwischen erfassten Eigenschaften, d. h. z. B. einer erfassten Amplitude, Frequenz, Laufzeit, mechanischer Schwingungen und entsprechenden Auswerteparametern herstellen. Entsprechende Zusammenhänge können gegebenenfalls auf Grundlage von entsprechende Zusammenhänge beschreibenden Referenzdaten hergestellt werden.

Durch den gestrichelten Kasten um die Steuereinrichtung 12 und die Auswerteeinrichtung 13 ist angedeutet, dass die Steuereinrichtung 12 und die Auswerteeinrichtung 13 eine hardware- und/oder softwaremäßig implementierte kombinierte Steuer- und Auswerteeinrichtung bilden können.

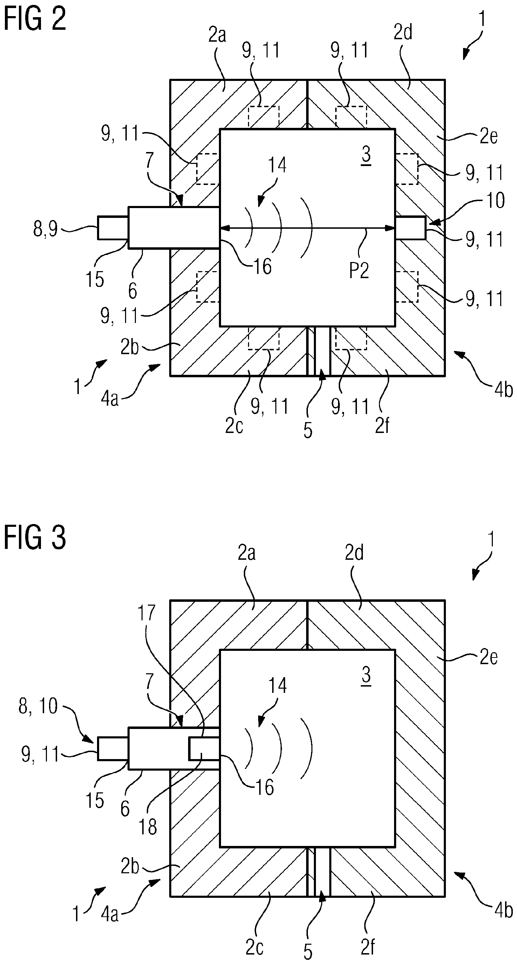

Fig. 2 zeigt ein Werkzeug 1 gemäß einem weiteren Ausführungsbeispiel in einer geschnittenen Ansicht.

Anhand von Fig. 2 ist ersichtlich, dass die Schwingungserzeugungseinrichtung 8 und die Erfassungseinrichtung 10 einander fest oder variable zuordenbare oder zugeordnete Schwingungserzeugungselemente 9 und Erfassungselemente 11 umfassen können. Mithin kann ein bestimmtes Schwingungserzeugungselement 9 einem bestimmten Erfassungselement 11 zugeordnet sein, und umgekehrt, sodass über das bestimmte Schwingungserzeugungselement 9 erzeugbare bzw. erzeugte mechanische Schwingungen 14, gegebenenfalls ausschließlich, über das diesem zugeordnete Erfassungselement 11 erfassbar sind. Eine entsprechende Zuordenbarkeit bzw. Zuordnung kann sich, wie in dem in Fig. 2 gezeigten Ausführungsbeispiel beispielhaft für eine einander gegenüber liegende Anordnung des in dem in der Werkzeugwandung 2b aufgenommenen Werkzeugelement 6 angeordneten Schwingungserzeugungselements 9 und des in der Werkzeugwandung 2e angeordneten Erfassungselements 11 dargestellt, z. B. aus einer bestimmten räumlichen Anordnung und/oder Ausrichtung eines bestimmten Schwingungserzeugungselements 9 relativ zu einem bestimmten Erfassungselement 11 ergeben. Zwischen jeweiligen einander zuordenbaren bzw. zugeordneten Schwingungserzeugungselementen 9 und Erfassungselementen 11 ist eine in Fig. 2 durch den Pfeil P2 angedeutete definierte Schwingungsübertragungsstrecke, über welche mechanische Schwingungen 14 zwischen einem Schwingungserzeugungselement 9 und einem Erfassungselement 11 übertragen werden, gegeben.

Anhand von Fig. 2 ist, wie durch die gestrichelt dargestellten beispielhaften weiteren Anordnungsmöglichkeiten von Schwingungserzeugungselementen 9 und Erfassungselementen 11, weiter ersichtlich, dass Schwingungserzeugungselemente 9 und Erfassungselemente 11 grundsätzlich an oder in gleichen oder unterschiedlichen Bereichen des Werkzeugs 1, insbesondere an oder in gleichen oder unterschiedlichen Bereichen einer gleichen Werkzeugwandung 2a - 2f oder in gleichen oder unterschiedlichen Bereichen unterschiedlicher Werkzeugwandungen 2a - 2f, angeordnet oder ausgebildet sein.

In diesem Zusammenhang ist allgemein zu erwähnen, dass ein entsprechendes Erfassungselement 11 je nach Anordnung relativ zu einem mechanische Schwingungen 14 erzeugenden Schwingungserzeugungselement 9 zur Erfassung von an einer Oberfläche, d. h. z. B. einer Werkzeugwandung 2a - 2f oder einem innerhalb der Kavität 3 befindlichen, gegebenenfalls innerhalb der Kavität 3, etwa im Rahmen eines Füllvorgangs der Kavität 3, strömenden, Kunststoffmaterial, reflektierte mechanische Schwingungen 14 oder um nicht-reflektierte durch die Kavität 3 transmittierte mechanische Schwingungen 14 eingerichtet sein kann. Ein Erfassungselement 11 kann sonach derart relativ zu einem Schwingungserzeugungselement 9 angeordnet oder ausgebildet sein, dass es - wie in dem Ausführungsbeispiel gemäß Fig. 1 - von dem Schwingungserzeugungselement 9 erzeugte, an einer Oberfläche reflektierte mechanische Schwingungen 14erfassen kann, oder derart relativ zu dem Schwingungserzeugungselement 9 angeordnet oder ausgebildet sein, dass es - wie in dem Ausführungsbeispiel gemäß Fig. 2 - nicht-reflektierte durch die Kavität 3 transmittierte mechanische Schwingungen 14 erfassen kann. In dem ersten Fall können das Schwingungserzeugungselement 9 und das Erfassungselement 11 - wie in dem Ausführungsbeispiel gemäß Fig. 1 - beispielsweise in der gleichen Werkzeugwandung 2a - 2f bzw. im Bereich der gleichen Werkzeugwandung 2a - 2f angeordnet oder ausgebildet sein, in dem zweiten Fall können das Schwingungserzeugungselement 9 und das Erfassungselement 11 - wie in dem Ausführungsbeispiel gemäß Fig. 2 - beispielsweise an oder in einander gegenüber liegenden Werkzeugwandungen 2a - 2f angeordnet oder ausgebildet sein.

Das Schwingungserzeugungselement 9 kann sonach derart angeordnet oder ausgebildet sein, mechanische Schwingungen 14 zu erzeugen, welche sich, wie in Fig. 1 gezeigt, zumindest abschnittsweise durch das Werkzeugelement 6 ausbreiten, und/oder derart angeordnet oder ausgebildet sein, mechanische Schwingungen 14 zu erzeugen, welche sich, wie ebenso in Fig. 1 gezeigt, zumindest abschnittsweise entlang einer zumindest abschnittsweise freiliegenden Außenfläche des Werkzeugelements 6 erstrecken, und/oder mechanische Schwingungen 14 zu erzeugen, welche sich, wie in Fig. 2 gezeigt, (im ungefüllten Zustand der Kavität 3) zumindest abschnittsweise durch die Kavität 3 ausbreiten. Vermittels eines entsprechenden Schwingungserzeugungselements 9 lassen sich sonach im Hinblick auf das Ausbreitungsmedium, in welchem sich diese ausbreiten, unterschiedliche mechanische Schwingungen 14 erzeugen; die mechanischen Schwingungen 14 können sich sonach durch einen Festkörper, nämlich durch eine Werkzeugwandung 2a - 2f, das Werkzeugelement 6 oder durch ein innerhalb der Kavität 3 befindliches Kunststoffmaterial, oder entlang eines Festkörpers, nämlich entlang einer Werkzeugwandung 2a - 2f, entlang des Werkzeugelements 6 oder entlang eines innerhalb der Kavität 3 befindlichen Kunststoffmaterials, oder durch die (ungefüllte) Kavität 3 ausbreiten. Bei den mechanischen Schwingungen 14 kann es sich sonach z. B. um sich durch ein Volumen ausbreitende Volumenschwingungen oder entlang einer Oberfläche ausbreitende Oberflächenschwingungen handeln.

Es ist demnach möglich, dass sich mechanische Schwingungen 14 im Rahmen ihrer Ausbreitung durch unterschiedliche Ausbreitungsmedien ausbreiten; mechanische Schwingungen 14 können sich demnach beispielsweise zunächst durch einen Festkörper, d. h. z. B. durch das Werkzeugelement 6, und sodann durch die (ungefüllte) Kavität 3 ausbreiten, oder umgekehrt, zunächst durch die (ungefüllte) Kavität 3 und sodann durch einen Festkörper, d. h. d. h. z. B. durch das Werkzeugelement 6, ausbreiten, oder zunächst durch einen ersten Festkörper, d. h. z. B. durch das Werkzeugelement 6, ausbreiten und sodann durch einen zweiten Festkörper, d. h. z. B. durch ein innerhalb der Kavität 3 befindliches Kunststoffmaterial, oder umgekehrt, ausbreiten. Im Zusammenhang mit in der Kavität 3 befindlichem Kunststoffmaterial ist es denkbar, dass sich mechanische Schwingungen 14 durch einen nicht verfestigten Anteil des Kunststoffmaterials, d. h. z. B. einen schmelzflüssigen Anteil des Kunststoffmaterials, und/oder durch einen nach Verfestigung eines nicht verfestigten Anteils des Kunststoffmaterials gebildeten verfestigten Anteil des Kunststoffmaterials, d. h. z. B. einen nach Erstarren eines schmelzflüssigen Anteils des Kunststoffmaterials gebildeten erstarrten Anteil des Kunststoffmaterials, ausbreiten.

Fig. 3 zeigt ein Werkzeug 1 gemäß einem weiteren Ausführungsbeispiel in einer geschnittenen Ansicht.

Anhand von Fig. 3 ist ersichtlich, dass der Auskopplungsbereich 16, über welchen über den Einkopplungsbereich 15 in das Werkzeugelement 6 eingekoppelte mechanische Schwingungen 14 aus dem Werkzeugelement 6 auskoppelbar sind, auch in einem in einem hierfür vorgesehenen Aufnahmebereich 17 des Werkzeugelements 6 angeordneten oder ausgebildeten Werkzeugelementeinsatzelement 18 angeordnet oder ausgebildet sein kann. Das Werkzeugelement 6 kann sonach einen gesondert in einen in einem Grundkörper des Werkzeugelements 6 vorgesehenen Aufnahmebereich 17 einsetzbares bzw. eingesetztes Werkzeugelementeinsatzelement 18 umfassen, wobei der Auskopplungsbereich 16 an oder in dem Werkzeugelementeinsatzelement 18 vorgesehen ist. Selbstverständlich können über den Auskopplungsbereich 16 auch reflektierte mechanischen Schwingungen 14 in das Werkzeugelementeinsatzelement 18 eingekoppelt werden. Der Auskopplungsbereich 16 kann sonach als kombinierter Aus- und Einkopplungsbereich bezeichnet bzw. erachtet werden. Über die Auswertung reflektierter eingekoppelter mechanischer Schwingungen 14 ist insbesondere eine Bestimmung von mechanischen Parametern sowie Druck und Temperatur möglich.

Das Werkzeugelementeinsatzelement 18 kann, insbesondere zur Beeinflussung der Eigenschaften der aus dem Werkzeugelement 6 auskoppelbaren bzw. der in dieses einkoppelbaren reflektierten mechanischen Schwingungen 14, aus einem anderen Material ausgebildet sein als das übrige Werkzeugelement 6. Beispielsweise kann das Werkzeugelementeinsatzelement 18 aus einem anderen Metall als das übrige Werkzeugelement 6 ausgebildet sein. Das Werkzeugelementeinsatzelement 18 kann z. B. aus einem im Vergleich weicheren Metall bzw. einer weicheren Metalltype als das übrige Werkzeugelement 6 ausgebildet sein. Das Werkzeugelementeinsatzelement 18 kann z. B. aus Kupfer gebildet sein, während das übrige Werkzeugelement 6 aus Stahl ausgebildet ist.

Insbesondere mit der in dem Ausführungsbeispiel gemäß Fig. 3 gezeigten Konfiguration des Werkzeugs 1 ist es auch möglich, dass ein Auswerteparameter einen ein Vorhandensein eines in die Kavität 3 eingelegten Einlegeteils und/oder eine Position eines in die Kavität 3 eingelegten Einlegeteils betreffenden Einlegeteilparameter betrifft. Das Vorhandensein bzw. die Position eines entsprechenden Einlegeteils können einen Einfluss auf die von dem wenigstens einen Erfassungselement 11 erfassten mechanischen Schwingungen 14 haben, sodass diese auch einen "Aussagegehalt" bezüglich des Vorhandenseins bzw. der Position eines entsprechenden Einlegeteils haben können.

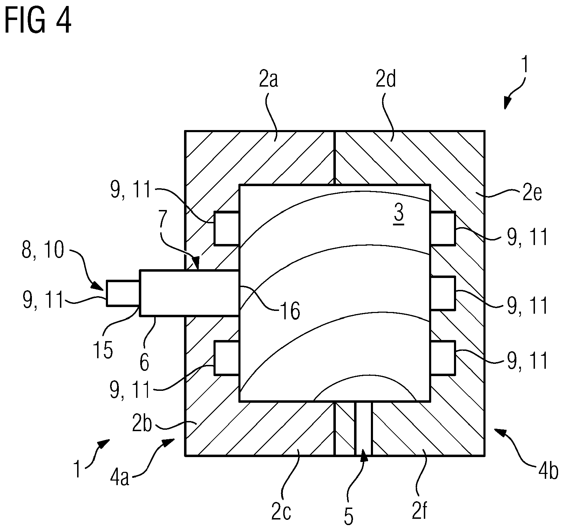

Fig. 4 zeigt ein Werkzeug 1 gemäß einem weiteren Ausführungsbeispiel in einer geschnittenen Ansicht.

Anhand von Fig. 4 ist ersichtlich, dass das Werkzeug 1 mehrere Schwingungserzeugungselemente 9, welche sich in den Eigenschaften der über diese jeweils erzeugbaren mechanischen Schwingungen 14 gleichen oder unterscheiden können, sowie mehrere Erfassungselemente 11, welche sich in den Eigenschaften der über diese jeweils erfassbaren mechanischen Schwingungen 14 gleichen oder unterscheiden können, umfassen kann.

Die Schwingungserzeugungselemente 9 und die Erfassungselemente 11 können entlang einer Werkzeugwandung 2a - 2f gleichmäßig oder ungleichmäßig verteilt angeordnet oder ausgebildet sein. Insbesondere können - wie in dem Ausführungsbeispiel gemäß Fig. 4 - mehrere Schwingungserzeugungselemente 9 und/oder Erfassungselemente 11 entlang von im Rahmen eines Füllvorgangs der Kavität 3 mit einem mit dem Werkzeug 1 verarbeitbaren Kunststoffmaterial, insbesondere einer Kunststoffschmelze, sukzessive mit Kunststoffmaterial beaufschlagten Werkzeugwandungen 2a - 2f verteilt angeordnet oder ausgebildet sein. Eine derartige Anordnung kann eine orts- und/oder zeitaufgelöste Ermittlung jeweiliger prozess- bzw. werkzeugrelevanter Parameter ermöglichen. Selbstverständlich können in analoger Weise auch seitens des Werkzeugelements 6 mehrere Schwingungserzeugungselemente 9 und Erfassungselemente 11 in gleichmäßig oder ungleichmäßig verteilter Anordnung vorhanden sein.

Die Auswerteinrichtung 13 kann sonach eingerichtet sein, einen entsprechenden Auswerteparameter örtlich, insbesondere bezogen auf das Volumen der Kavität 3 und/oder zeitlich, insbesondere bezogen auf wenigstens einen im Rahmen des vermittels des Werkzeugs 1 durchführbaren Verarbeitungsprozesses erfolgenden Teilprozess, insbesondere einen Abkühl- und/oder Verbindungs- und/oder Verfestigungsprozess eines mit dem Werkzeug 1 verarbeitbaren Kunststoffmaterials, aufzulösen. Es kann sonach ein örtlich und/oder zeitlich veränderlicher Verlauf eines entsprechenden Auswerteparameters ermittelt werden.

Anhand der in den in den Fig. gezeigten Ausführungsbeispiele ist ersichtlich, dass Schwingungserzeugungselemente 9 und Erfassungselemente 11 in grundsätzlich beliebiger Anordnung an oder in dem Werkzeugelement 6 und/oder an oder in wenigstens einer Werkzeugwandung 2a - 2f vorgesehen sein können.

Für alle Ausführungsbeispiele gilt, dass das Werkzeug 1 einen Bestandteil einer diesem übergeordneten Vorrichtung 19 zur Verarbeitung von Kunststoffmaterialien bilden kann. Die Vorrichtung 19, welche z. B. als Spritzgießvorrichtung, als Extrusionsvorrichtung oder als Schäumvorrichtung ausgebildet sein kann, umfasst entsprechend wenigstens ein entsprechendes Werkzeug 1.

Mit den in den Fig. gezeigten Werkzeugen 1 bzw. Vorrichtungen 19 lässt sich ein Verfahren zur Verarbeitung von Kunststoffmaterialien, insbesondere ein Spritzgießverfahren, ein Extrusionsverfahren oder ein Schäumverfahren, implementieren. Im Rahmen des Verfahrens können durch entsprechende Erfassung und Auswertung von mechanischen Schwingungen 14 Auswerteparameter, d. h. insbesondere prozess- und/oder werkzeugrelevante Parameter, ermittelt werden.

Die Erfindung ist im beigefügten Anspruchssatz dargelegt.

## Patentansprüche

1. Werkzeug (1) zur Kunststoffverarbeitung, umfassend:
- eine Anzahl an Werkzeugwandungen (2a - 2f), welche eine formgebende Kavität (3) des Werkzeugs (1) begrenzen,
- wenigstens ein Werkzeugelement (6), welches in einer hierfür vorgesehenen Aufnahme (7) einer die formgebende Kavität (3) des Werkzeugs (1) begrenzenden Werkzeugwandung (2a - 2f) aufgenommen ist,
- eine Schwingungserzeugungseinrichtung (8), welche wenigstens ein Schwingungserzeugungselement (9), welches zur Erzeugung von mechanischen Schwingungen (14), insbesondere Ultraschallschwingungen, eingerichtet ist, umfasst, sowie
- eine Erfassungseinrichtung (10), welche wenigstens ein Erfassungselement (11), welches zur Erfassung von, von dem wenigstens einen Schwingungserzeugungselement (9) erzeugten mechanischen Schwingungen (14) eingerichtet ist, umfasst, wobei
das wenigstens eine Schwingungserzeugungselement (9) und das wenigstens eine Erfassungselement (11) an oder in dem wenigstens einen Werkzeugelement (6) angeordnet oder ausgebildet sind, **dadurch gekennzeichnet, dass** das wenigstens eine Werkzeugelement (6) in wenigstens einem, insbesondere translatorischen, Bewegungsfreiheitsgrad zwischen einer ersten Betriebsstellung, in welcher das wenigstens eine Werkzeugelement (6) nicht in das freie Volumen der formgebenden Kavität (3) bewegt ist, und einer zweiten Betriebsstellung, in welcher das wenigstens eine Werkzeugelement (6) zumindest abschnittsweise in das freie Volumen der formgebenden Kavität (3) bewegt ist, bewegbar gelagert ist.

2. Werkzeug nach Anspruch 1, **dadurch gekennzeichnet, dass** das wenigstens eine Schwingungserzeugungselement (11) derart angeordnet oder ausgebildet ist, mechanische Schwingungen (14) zu erzeugen, welche sich zumindest abschnittsweise durch wenigstens eine Werkzeugwandung (2a - 2f) und/oder durch das wenigstens eine Werkzeugelement (6) ausbreiten, oder derart angeordnet oder ausgebildet ist, mechanische Schwingungen (14) zu erzeugen, welche sich zumindest abschnittsweise entlang einer zumindest abschnittsweise freiliegenden Fläche wenigstens einer Werkzeugwandung (2a - 2f) und/oder entlang einer zumindest abschnittsweise freiliegenden Fläche des wenigstens einen Werkzeugelements (5) ausbreiten, oder derart angeordnet oder ausgebildet ist, mechanisches Schwingungen (14) zu erzeugen, welche sich zumindest abschnittsweise durch die Kavität (3) des Werkzeugs (1) ausbreiten.

3. Werkzeug nach Anspruch 1 oder 2, **dadurch gekennzeichnet, dass** das wenigstens eine Schwingungserzeugungselement (9) und/oder das wenigstens eine Erfassungselement (11) im Bereich eines der formgebenden Kavität (3) des Werkzeugs (1) abgewandten oder zugewandten freien Endes des wenigstens einen Werkzeugelements (6) angeordnet oder ausgebildet ist bzw. sind.

4. Werkzeug nach einem der vorhergehenden Ansprüche, **dadurch gekennzeichnet, dass** das wenigstens eine Werkzeugelement (6) wenigstens einen Einkopplungsbereich (15), über welchen seitens des Schwingungserzeugungselements (9) erzeugte mechanische Schwingungen (14) in das wenigstens eine Werkzeugelement (6) einkoppelbar sind, und wenigstens einen Auskopplungsbereich (16), über welchen über den Einkopplungsbereich (15) in das wenigstens eine Werkzeugelement (6) eingekoppelte mechanische Schwingungen (14) aus dem wenigstens einen Werkzeugelement (6) auskoppelbar sind, umfasst.

5. Werkzeug nach Anspruch 4, **dadurch gekennzeichnet, dass** der Auskopplungsbereich (16) in einem in einem hierfür vorgesehenen Aufnahmebereich (17) des wenigstens einen Werkzeugelements (6) angeordneten oder ausgebildeten Werkzeugelementeinsatzelement (18) angeordnet oder ausgebildet ist, wobei das Werkzeugelementeinsatzelement (18) optional, insbesondere zur Beeinflussung der Eigenschaften der aus dem wenigstens einen Werkzeugelement (6) auskoppelbaren mechanischen Schwingungen (14), aus einem anderen Material ausgebildet ist als das übrige Werkzeugelement (6).

6. Werkzeug nach einem der vorhergehenden Ansprüche, **gekennzeichnet durch** mehrere Schwingungserzeugungselemente (9), welche sich in den Eigenschaften der über diese jeweils erzeugbaren mechanischen Schwingungen (14) gleichen oder unterscheiden, und/oder mehrere Erfassungselemente (11), welche sich in den Eigenschaften der über diese jeweils erfassbaren mechanischen Schwingungen (14) gleichen oder unterscheiden.

7. Werkzeug nach einem der vorhergehenden Ansprüche, **gekennzeichnet durch** mehrere Schwingungserzeugungselemente (9) und/oder mehrere Erfassungselemente (11), welche entlang wenigstens einer Werkzeugwandung (2a - 2f), insbesondere entlang einer im Rahmen eines Füllvorgangs der formgebenden Kavität (3) mit einem mit dem Werkzeug (1) verarbeitbaren Kunststoffmaterial, insbesondere einer Kunststoffschmelze, sukzessive mit Kunststoffmaterial beaufschlagten Werkzeugwandung (2a - 2f), verteilt angeordnet oder ausgebildet sind.

8. Werkzeug nach einem der vorhergehenden Ansprüche, **gekennzeichnet durch** eine Steuereinrichtung (12), welche zur Steuerung der Erzeugung von mechanischen Schwingungen (14) vermittels des wenigstens einen Schwingungserzeugungselements (9) eingerichtet ist.

9. Werkzeug nach einem der vorhergehenden Ansprüche, **gekennzeichnet durch** eine Auswerteeinrichtung (13), welche zur Auswertung der von dem wenigstens einen Erfassungselement (11) erfassten mechanischen Schwingungen (14) im Hinblick auf wenigstens einen Auswerteparameter eingerichtet ist, wobei die Auswerteinrichtung (13) optional eingerichtet ist, den Auswerteparameter örtlich, insbesondere bezogen auf das Volumen der Kavität (3) des Werkzeugs (1), und/oder den Auswerteparameter zeitlich, insbesondere bezogen auf wenigstens einen im Rahmen des vermittels des Werkzeugs (1) durchführbaren Verarbeitungsprozesses erfolgenden Teilprozess, insbesondere einen Abkühl- und/oder Verbindungs- und/oder Verfestigungsprozess eines mit dem Werkzeug (1) verarbeitbaren Kunststoffmaterials, aufzulösen.

10. Werkzeug nach Anspruch 9, **dadurch gekennzeichnet, dass** der Auswerteparameter einen chemischen und/oder physikalischen Materialparameter eines vermittels eines im Rahmen des vermittels des Werkzeugs (1) durchführbaren Verarbeitungsprozesses verarbeiteten Kunststoffmaterials betrifft; und/oder
der Auswerteparameter einen Prozessparameter eines im Rahmen erfolgenden Teilprozess, insbesondere einen Abkühl- und/oder Verfestigungs- und/oder Verbindungsprozess eines mit dem Werkzeug (1) verarbeitbaren Kunststoffmaterials, betrifft; und/oder
der Auswerteparameter einen die strukturelle Integrität des Werkzeugs (1) und/oder des wenigstens einen Werkzeugelements (6) beschreibenden Integritätsparameter betrifft.

11. Werkzeug nach einem der vorhergehenden Ansprüche, **dadurch gekennzeichnet, dass** das wenigstens eine Werkzeugelement (6) als Auswerfer- oder Schieberelement ausgebildet ist oder ein Auswerfer- oder Schieberelement umfasst.

12. Werkzeug nach einem der vorhergehenden Ansprüche, **dadurch gekennzeichnet, dass** es ein Spritzgießwerkzeug zur Verarbeitung spritzgießfähiger, insbesondere thermoplastischer und/oder duroplastischer, Kunststoffmaterialien, ein Extrusionswerkzeug zur Verarbeitung extrusionsfähiger, insbesondere thermoplastischer und/oder duroplastischer, Kunststoffmaterialien oder ein Schäumwerkzeug zur Verarbeitung schäumbarer Kunststoffpartikel ist.

13. Vorrichtung zur Verarbeitung von Kunststoffmaterialien, **gekennzeichnet durch** wenigstens ein Werkzeug (1) nach einem der vorhergehenden Ansprüche.

## Claims

1. Tool (1) for processing plastic, comprising:
- a number of tool walls (2a-2f), which delimit a shaping cavity (3) of the tool (1),
- at least one tool element (6), which is held in a receptacle (7) provided therefor of a tool wall (2a-2f) delimiting the shaping cavity (3) of the tool (1),
- an oscillation-generating device (8), which comprises at least one oscillation-generating element (9), which is designed to generate mechanical oscillations (14), more particularly ultrasonic oscillations, and
- a sensing device (10), which comprises at least one sensing element (11), which is designed to sense mechanical oscillations (14) generated by the at least one oscillation-generating element (9), wherein
the at least one oscillation-generating element (9) and the at least one sensing element (11) are arranged or formed on or in the at least one tool element (6),
**characterised in that**
the at least one tool element (6) is mounted such that it can be moved in at least one, in particular translatory, degree of freedom of movement between a first operating position, in which the at least one tool element (6) is not moved into the free volume of the shaping cavity (3), and a second operating position, in which the at least one tool element (6) is moved at least in sections into the free volume of the shaping cavity (3).

2. Tool according to claim 1, **characterised in that** the at least one oscillation-generating element (11) is arranged or formed such as to generate mechanical oscillations (14) that extend at least in sections through at least one tool wall (2a-2f) and/or through the at least one tool element (6), or is arranged or formed such as to generate mechanical oscillations (14) that extend at least in sections along an at least partially exposed surface of at least one tool wall (2a-2f) and/or along an at least partially exposed surface of the at least one tool element (5), or is arranged or formed such as to generate mechanical oscillations (14) that extend at least in sections through the cavity (3) of the tool (1).

3. Tool according to claim 1 or 2, **characterised in that** the at least one oscillation-generating element (9) and/or the at least one sensing element (11) is/are arranged or formed in the region of a free end of the at least one tool element (6) facing away from or towards the shaping cavity (3) of the tool (1).

4. Tool according to any one of the preceding claims, **characterised in that** the at least one tool element (6) comprises at least one coupling-in region (15) via which mechanical oscillations (14) generated by the oscillation-generating element (9) can be coupled into the at least one tool element (6), and at least one coupling-out region (16) via which mechanical oscillations (14) coupled into the at least one tool element (6) via the coupling-in region (15) can be coupled out of the at least one tool element (6).

5. Tool according to claim 4, **characterised in that** the coupling-out region (16) is arranged or formed in a tool element insert element (18) arranged or formed in a receiving region (17) of the at least one tool element (6) provided for this purpose, wherein the tool element insert element (18) is optionally formed from a different material than the remaining tool element (6), in particular for influencing the properties of the mechanical oscillations (14) that can be coupled out of the at least one tool element (6).

6. Tool according to any one of the preceding claims, **characterised by** a plurality of oscillation-generating elements (9) that are identical or different in the properties of the mechanical oscillations (14) that can be generated via these in each case, and/or a plurality of sensing elements (11) that are identical or different in the properties of the mechanical oscillations (14) that can be sensed via these in each case.

7. Tool according to any one of the preceding claims, **characterised by** a plurality of oscillation-generating elements (9) and/or sensing elements (11) that are arranged or formed distributed along at least one tool wall (2a-2f), in particular along a tool wall (2a-2f) that is successively acted upon with plastic material in the course of a filling operation of the shaping cavity (3) with a plastic material, in particular a plastic melt, that can be processed with the tool (1).

8. Tool according to any one of the preceding claims, **characterised by** a control device (12) configured to control the generation of mechanical oscillations (14) by means of the at least one oscillation-generating element (9).

9. Tool according to any one of the preceding claims, **characterised by** an evaluation device (13) configured for evaluating the mechanical oscillations (14) sensed by the at least one sensing element (11) in view of at least one evaluation parameter, wherein the evaluation device (13) is optionally configured to resolve the evaluation parameter spatially, in particular in relation to the volume of the cavity (3) of the tool (1), and/or to resolve the evaluation parameter temporally, in particular in relation to at least one sub-process, in particular a cooling and/or bonding and/or solidification process of a plastic material that can be processed with the tool (1), which takes place within the framework of the processing process which can be carried out by means of the tool (1).

10. Tool according to claim 9, **characterised in that** the evaluation parameter is a chemical and/or physical material parameter of a plastic material processed by means of a processing process that can be carried out by means of the tool (1); and/or
the evaluation parameter is a process parameter of a sub-process that takes place in the context, in particular a cooling and/or solidification and/or bonding process of a plastic material that can be processed with the tool (1); and/or
the evaluation parameter is an integrity parameter describing the structural integrity of the tool (1) and/or of the at least one tool element (6).

11. Tool according to any one of the preceding claims, **characterised in that** the at least one tool element (6) is designed as an ejector or slider element or comprises an ejector or slider element.

12. Tool according to any one of the preceding claims, **characterised in that** it is an injection moulding tool for processing injection-mouldable, in particular thermoplastic and/or thermosetting plastic materials, an ejection mould for processing ejection-mouldable, in particular thermoplastic and/or thermosetting plastic materials, or a foaming tool for processing foamable plastic particles.

13. Device for processing plastic materials, **characterised by** at least one tool (1) according to any one of the preceding claims.

## Revendications

1. Outil (1) destiné au façonnage de plastique, comprenant :
- un certain nombre de parois d'outil (2a - 2f) qui délimitent une cavité de conformation (3) de l'outil (1),
- au moins un élément d'outil (6) qui est reçu dans un logement (7) prévu à cet effet d'une paroi d'outil (2a - 2f) délimitant la cavité de conformation (3) de l'outil (1),
- un dispositif générateur de vibrations (8), qui comprend au moins un élément générateur de vibrations (9), qui est conçu pour générer des vibrations mécaniques (14), en particulier des vibrations ultrasonores, ainsi que
- un dispositif de détection (10), qui comprend au moins un élément de détection (11), qui est conçu pour détecter des vibrations mécaniques (14) générées par l'au moins un élément générateur de vibrations (9), dans lequel
l'au moins un élément générateur de vibrations (9) et l'au moins un élément de détection (11) sont disposés ou réalisés sur ou dans l'au moins un élément d'outil (6), **caractérisé en ce que**
l'au moins un élément d'outil (6) est monté mobile dans au moins un degré de liberté de mouvement, en particulier en translation, entre une première position de fonctionnement, dans laquelle l'au moins un élément d'outil (6) n'est pas déplacé dans le volume libre de la cavité de conformation (3), et une seconde position de fonctionnement, dans laquelle l'au moins un élément d'outil (6) est déplacé au moins en partie dans le volume libre de la cavité de conformation (3).

2. Outil selon la revendication 1, **caractérisé en ce que** l'au moins un élément générateur de vibrations (11) est disposé ou réalisé de manière à générer des vibrations mécaniques (14), qui se propagent au moins en partie à travers au moins une paroi d'outil (2a - 2f) et/ou à travers l'au moins un élément d'outil (6), ou est disposé ou réalisé de manière à générer des vibrations mécaniques (14), qui se propagent au moins en partie le long d'une surface au moins en partie à découvert d'une paroi d'outil (2a - 2f) et/ou le long d'une surface au moins en partie à découvert de l'au moins un élément d'outil (5), ou est disposé ou réalisé de manière à générer des vibrations mécaniques (14), qui se propagent au moins en partie à travers la cavité (3) de l'outil (1).

3. Outil selon la revendication 1 ou 2, **caractérisé en ce que** l'au moins un élément générateur de vibrations (9) et/ou l'au moins un élément de détection (11) est ou sont disposé(s) ou réalisé(s) dans la zone d'une extrémité libre de l'au moins un élément d'outil (6) orientée vers ou dans la direction opposée à la cavité de conformation (3) de l'outil (1).

4. Outil selon l'une des revendications précédentes, **caractérisé en ce que** l'au moins un élément d'outil (6) comprend au moins une zone d'injection (15), par le biais de laquelle des vibrations mécaniques (14) générées du côté de l'élément générateur de vibrations (9) peuvent être injectées dans l'au moins un élément d'outil (6) et au moins une zone de sortie (16), par le biais de laquelle des vibrations mécaniques (14) injectées par le biais de la zone d'injection (15) dans l'au moins un élément d'outil (6) peuvent être extraites de l'au moins un élément d'outil (6).

5. Outil selon la revendication 4, **caractérisé en ce que** la zone de sortie (16) est disposée ou réalisée dans un insert d'élément d'outil (18), disposé ou réalisé dans une zone de réception (17) prévue à cet effet de l'au moins un élément d'outil (6), l'insert d'élément d'outil (18) étant réalisé en option dans un autre matériau que le reste de l'élément d'outil (6), en particulier pour influencer les propriétés des vibrations mécaniques (14) pouvant être extraites de l'au moins un élément d'outil (6).

6. Outil selon l'une des revendications précédentes, **caractérisé par** plusieurs éléments générateurs de vibrations (9), qui se ressemblent ou se différencient en ce qui concerne les propriétés des vibrations mécaniques (14) pouvant respectivement être générées par le biais de ceux-ci, et/ou plusieurs éléments de détection (11), qui se ressemblent ou se différencient en ce qui concerne les propriétés des vibrations mécaniques (14) pouvant respectivement être détectées par le biais de ceux-ci.

7. Outil selon l'une des revendications précédentes, **caractérisé par** plusieurs éléments générateurs de vibrations (9) et/ou plusieurs éléments de détection (11), qui sont disposés ou réalisés répartis le long d'au moins une paroi d'outil (2a - 2f), en particulier le long d'une paroi d'outil (2a - 2f) soumise successivement à l'action d'un matériau plastique dans le cadre d'un processus de remplissage de la cavité de conformation (3) avec un matériau plastique façonnable avec l'outil (1), en particulier une matière plastique fondue.

8. Outil selon l'une des revendications précédentes, **caractérisé par** un dispositif de commande (12), qui est conçu pour commander la génération de vibrations mécaniques (14) au moyen de l'au moins un élément générateur de vibrations (9).

9. Outil selon l'une des revendications précédentes, **caractérisé par** un dispositif d'évaluation (13), qui est conçu pour évaluer les vibrations mécaniques (14) détectées par l'au moins un élément de détection (11) en ce qui concerne au moins un paramètre d'évaluation, le dispositif d'évaluation (13) étant en option conçu pour analyser le paramètre d'évaluation d'un point de vue localisé, en particulier par rapport au volume de la cavité (3) de l'outil (1), et/ou analyser le paramètre d'évaluation d'un point de vue temporel, en particulier par rapport à au moins un processus partiel effectué dans le cadre du processus de façonnage exécutable au moyen de l'outil (1), en particulier un processus de refroidissement et/ou de liaison et/ou de solidification d'un matériau plastique façonnable avec l'outil (1).

10. Outil selon la revendication 9, **caractérisé en ce que** le paramètre d'évaluation concerne un paramètre chimique et/ou physique du matériau d'un matériau plastique façonné dans le cadre du processus de façonnage exécutable au moyen de l'outil (1) ; et/ou
le paramètre d'évaluation concerne un paramètre de processus d'un processus partiel effectué dans le cadre, en particulier un processus de refroidissement et/ou de solidification et/ou de liaison d'un matériau plastique façonnable avec l'outil (1) ; et/ou
le paramètre d'évaluation concerne un paramètre d'intégrité décrivant l'intégrité structurale de l'outil (1) et/ou de l'au moins un élément d'outil (6).

11. Outil selon l'une des revendications précédentes, **caractérisé en ce que** l'au moins un élément d'outil (6) est réalisé sous la forme d'un élément éjecteur ou poussoir ou comprend un élément éjecteur ou poussoir.

12. Outil selon l'une des revendications précédentes, **caractérisé en ce qu'**il s'agit d'un outil de moulage par injection destiné au façonnage de matériaux plastiques, en particulier thermoplastiques et/ou thermodurcissables, aptes à être moulés par injection, un outil d'extrusion destiné au façonnage de matériaux plastiques, en particulier thermoplastiques et/ou thermodurcissables, aptes à être extrudés ou un outil de moussage destiné au façonnage de particules plastiques expansibles.

13. Dispositif destiné au façonnage de matériaux plastiques, **caractérisé par** au moins un outil (1) selon l'une des revendications précédentes.
